# EUROPEAN PATENT APPLICATION

(11) **EP 4 838 587 A1**
(43) Date of publication of application: **11.11.2026**
(21) Application number: 26155354.9
(22) Date of filing: 30.01.2026
(51) Int. Cl.: H01M 4/70, H01M 6/40, H01M 50/103

(54) **SECONDARY BATTERY**

(30) Priority: 09.05.2025 KR 20250060392
(71) Applicant: SAMSUNG SDI CO., LTD., Yongin-si, Gyeonggi-do 17084 (KR)
(72) Inventor: MOON, Eun Jeong, 17084 Yongin-si (KR); KIM, Dong Hyun, 17084 Yongin-si (KR); SEO, Ye Jin, 17084 Yongin-si (KR)
(74) Representative: Maiwald GmbH

(57) **Abstract**

A secondary battery includes an electrode assembly having a positive electrode plate, a negative electrode plate, and a separator therebetween, a case accommodating the electrode assembly, and positive and negative electrode substrate tabs extending from the electrode assembly, wherein the electrode assembly further includes at least one protrusion part in a region surrounding the positive and negative electrode substrate tabs, the at least one protrusion part including a positive electrode protrusion part protruding beyond a base edge line of the positive electrode plate, a negative electrode protrusion part protruding beyond a base edge line of the negative electrode plate, and a separator protrusion part protruding beyond a base edge line of the separator, and a protrusion length of each of the positive electrode protrusion part, the negative electrode protrusion part, and the separator protrusion part is smaller than a length of each of the positive and negative electrode substrate tabs.

## Description

### BACKGROUND

### 1. Field

Embodiments of the present disclosure relate to a secondary battery.

### 2. Description of the Related Art

Unlike a primary battery, a secondary battery may be charged and discharged. Low-capacity secondary batteries having a single battery cell packaged in the form of a pack are widely employed in small, portable electronic devices, such as smart phones, feature phones, laptop computers, digital cameras, camcorders, and the like, while large-capacity secondary batteries are widely used as power sources for driving motors in hybrid vehicles, electric vehicles, and the like, as well as batteries for power storage. The secondary battery includes an electrode assembly having a positive electrode and a negative electrode, a case that accommodates the electrode assembly, and electrode terminals connected to the electrode assembly.

The above disclosed information is only for enhancement of understanding of the background of the present disclosure and therefore it may contain information that does not constitute prior art.

### SUMMARY

A secondary battery according to an aspect of the present disclosure may include a stacked electrode assembly having a plurality of positive electrode plates and a plurality of negative electrode plates, and a separator interposed between the positive electrode plates and the negative electrode plates; a case accommodating the electrode assembly; and a positive electrode substrate tab and a negative electrode substrate tab extending from the electrode assembly, wherein the electrode assembly includes at least one protrusion part provided in a region surrounding the positive electrode substrate tab and the negative electrode substrate tab and extending and protruding from the base edge line, the protrusion part includes a positive electrode protrusion part protruding beyond the base edge line of the positive electrode plate, a negative electrode protrusion part protruding beyond the base edge line of the negative electrode plate, and a separator protrusion part protruding beyond the base edge line of the separator, and the protrusion lengths of the positive electrode protrusion part, the negative electrode protrusion part, and the separator protrusion part are smaller than the protrusion lengths of the positive electrode substrate tab and the negative electrode substrate tab.

In some examples, the protrusion length of the separator protrusion part may be equal to or less than the protrusion lengths of the positive electrode substrate tab and the negative electrode substrate tab.

In some examples, the corners of both sides of the positive electrode protrusion part and the negative electrode protrusion part may be round or right-angled.

In some examples, when the corners of the positive electrode protrusion part and the negative electrode protrusion part are round, the radius of curvature (R) of the corners may be 0.5 mm to 5 mm.

In some examples, the separation distance between the positive electrode substrate tab and the positive electrode protrusion part, and the separation distance between the negative electrode substrate tab and the negative electrode protrusion part, may be at least 2.0 mm.

In some examples, the gap between the protrusion end of the separator protrusion part and the protrusion end of the negative electrode protrusion part may range from 1 mm to 2 mm.

In some examples, the gap between the protrusion end of the negative electrode protrusion part and the protrusion end of the positive electrode protrusion part may range 0.9 mm to 1.4 mm.

In some examples, the gap between the side end of the positive electrode plate and the side end of the negative electrode plate may range from 0.1 mm to 0.6 mm.

In some examples, the gap between the side end of the negative electrode plate and the side end of the separator may range from 0.3 mm to 1.3 mm.

In some examples, the positive electrode substrate tab and the negative electrode substrate tab may be disposed so as to be exposed in the same direction in the electrode assembly.

In some examples, the protrusion part may be disposed between the positive electrode substrate tab and the negative electrode substrate tab.

In some examples, the protrusion part may be disposed between the positive electrode substrate tab and one end of the electrode assembly, or between the negative electrode substrate tab and the other end of the electrode assembly.

In some examples, the protrusion part may be disposed between the positive electrode substrate tab and the negative electrode substrate tab, between the positive electrode substrate tab and one end of the electrode assembly, and between the negative electrode substrate tab and the other end of the electrode assembly.

In some examples, the positive electrode substrate tab and the negative electrode substrate tab may be disposed on opposite sides of the electrode assembly.

In some examples, one protrusion part may be disposed on both sides of the positive electrode substrate tab, and one protrusion part may be disposed on both sides of the negative electrode substrate tab.

In some examples, the positive electrode substrate tab and the negative electrode substrate tab may each be positioned at the center of the corresponding electrode assembly side, and may be positioned on the same line.

In some examples, a positive electrode protrusion part may be disposed on one side of the positive electrode substrate tab, and a negative electrode protrusion part may be disposed on one side of the negative electrode substrate tab.

In some examples, the positive electrode substrate tab and the negative electrode substrate tab may be positioned relative to each other so as not to overlap in a vertical line.

In some examples, the positive electrode protrusion part and the negative electrode protrusion part may have a side end corner of the electrode assembly formed in a round shape.

In some examples, a positive electrode lead and a negative electrode lead that are electrically connected to the positive electrode substrate tab and the negative electrode substrate tab, respectively, and extend outward from the case, may be further included, and the positive electrode substrate tab and the negative electrode substrate tab and the positive electrode lead and the negative electrode lead may not be bent.

### BRIEF DESCRIPTION OF DRAWINGS

The following drawings attached to this specification illustrate preferred embodiments of the present disclosure, and serve to further understand the technical idea of the present disclosure together with the detailed description of the present disclosure, and thus, the present disclosure should not be construed as being limited to the matters described in such drawings.
FIG. 1 is a perspective view of a secondary battery according to an embodiment.
FIG. 2 is a side cross-sectional view of an electrode assembly of the secondary battery of FIG. 1.
FIG. 3 is a side cross-sectional view of the secondary battery of FIG. 1.
FIG. 4 is a plan view of an electrode assembly according to an embodiment.
FIG. 5 is a plan view of an electrode assembly having an electrode lead according to an embodiment.
FIGS. 6 to 9 are plan views of the shapes of protrusion parts according to embodiments.
FIGS. 10 to 13 are plan views of the positions of electrode tabs and protrusion parts according to embodiments.
FIG. 14 is a schematic view of a smartphone equipped with a secondary battery pack according to an embodiment.
FIGS. 15 and 16 are views of a battery pack according to embodiments.
FIGS. 17 and 18 are views of a vehicle body and vehicle body parts having a battery pack according to embodiments.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe embodiments in the best way. Therefore, the embodiments described in this specification and the configurations shown in the drawings are only some of the embodiments of the present disclosure and do not represent all of the aspects, and features of the present disclosure.

In addition, it will be understood that the terms "comprise," "include," "comprising," and/or "including," when used in this specification, specify the presence of stated features, integers, steps, operations, elements, and/or components but do not preclude the presence or addition of one or more other features, integers, steps, operations, elements, components, and/or groups thereof. In addition, when describing embodiments of the present disclosure, the wording "may ~" or "may be~" may include "one or more embodiments of the present disclosure."

In addition, in the attached drawings, the dimensions of some components may be exaggerated for clarity of illustration. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," etc., may be used herein to describe various components, these components should not be limited by these terms. These terms are used to distinguish one component from another component. Thus, unless otherwise defined, a first component described below could be termed a second component, without departing from the scope of the present disclosure.

Throughout the specification, the singular forms are intended to include the plural forms as well, unless the context clearly indicates otherwise.

The arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Also, it will be understood that when an element is referred to as being "coupled to," "linked to," or " "connected to" another element, these elements can be directly coupled or connected to each other, another intervening element may be present therebetween, or the respective elements may be coupled, linked, or connected to each other through another elements. In addition, it will be understood that when an element is referred to as being electrically coupled to another element, the element can be directly connected to another element or an intervening element may be present therebetween such that the element and another element are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

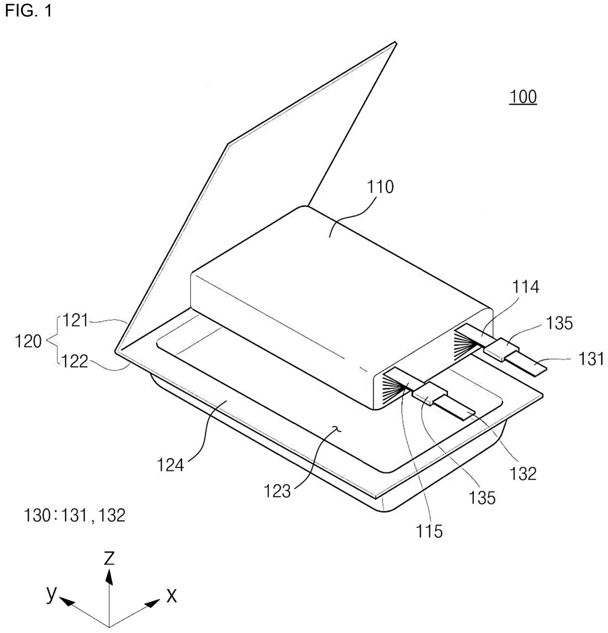

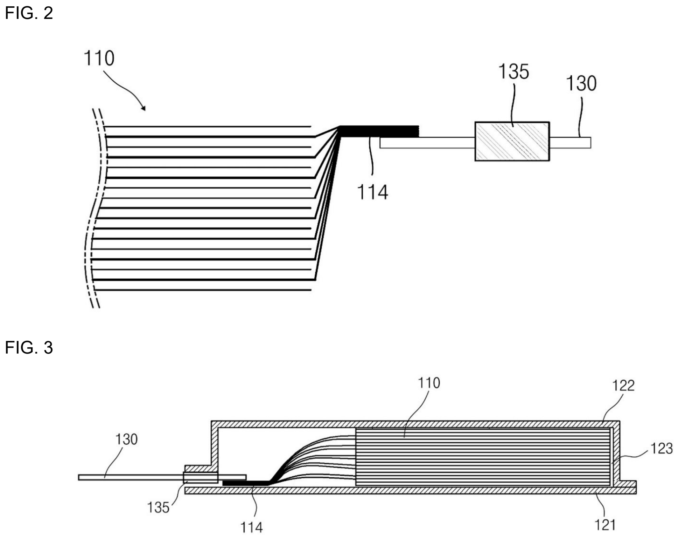

FIG. 1 is an exploded perspective view showing the structure of a secondary battery according to an embodiment, FIG. 2 is a partial side cross-sectional view showing an electrode assembly of the secondary battery of FIG. 1, and FIG. 3 is an assembled side cross-sectional view showing the secondary battery of FIG. 1.

As shown in FIGS. 1 and 3, a secondary battery 100 according to the present disclosure includes an electrode assembly 110 and a pouch 120 accommodating the electrode assembly 110.

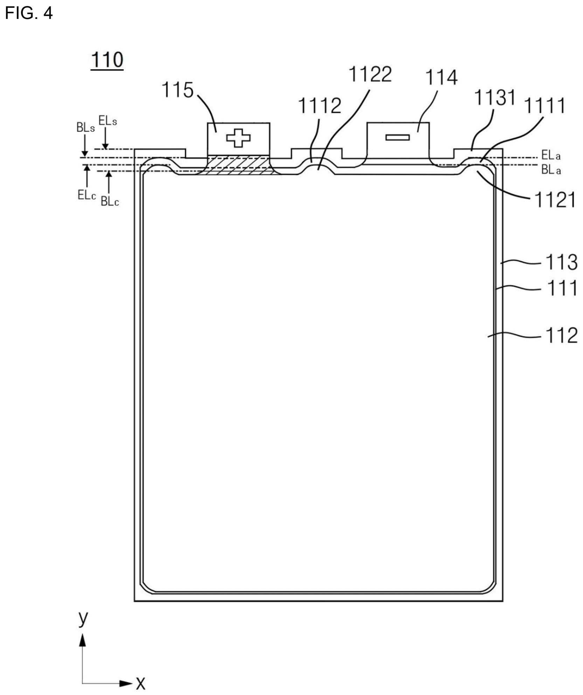

The electrode assembly 110 includes a negative electrode plate 111 as a first electrode plate, a positive electrode plate 112 as a second electrode plate, and a separator 113 interposed therebetween (see FIG. 4). In some examples, the electrode assembly 110 may be formed by stacking the negative electrode plate 111, the separator 113, and the positive electrode plate 112, which are formed in a thin plate shape or a film shape. In some examples, one or more electrode assemblies 110 may be stacked such that the electrode assemblies 110 are adjacent to each other and accommodated in the pouch 120, and the number of electrode assemblies 110 in the case is not limited in the present disclosure. The first electrode plate of the electrode assembly 110 may act as a negative electrode, and the second electrode plate may act as a positive electrode. Of course, the reverse is also possible.

The negative electrode plate 111 may be formed by applying a negative electrode active material, such as graphite or carbon, to a negative electrode current collector formed of a metal foil, such as copper, a copper alloy, nickel, or a nickel alloy. The negative electrode plate 111 may include a negative electrode active material layer that is a region to which the negative electrode active material is applied. The negative electrode plate 111 may include a negative uncoated portion that is a region to which the negative electrode active material is not applied.

The negative electrode plate 111 may include a negative electrode tab 114 electrically connected to the negative uncoated portion. In some embodiments, when the negative electrode plate 111 is manufactured, the negative electrode tab 114 may be formed by being cut in advance to protrude to one side of the electrode assembly 110, or the negative electrode tab 114 may protrude to one side of the electrode assembly 110 more than (e.g., farther than or beyond) the separator 113 without being separately cut. The negative electrode tab 114 may include or be referred to as a first substrate tab, a first electrode tab, or a first collector tab.

The negative electrode active material, which is the first active material may include a material capable of reversibly intercalating/deintercalating lithium ions, lithium metal, an alloy of lithium metal, a material capable of being doped and dedoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and dedoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to an embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

The positive electrode plate 112 may be formed by applying a positive electrode active material, such as a transition metal oxide, on a positive electrode current collector formed of a metal foil, such as aluminum or an aluminum alloy. The positive electrode plate 112 may include a positive electrode active material layer that is a region to which the positive electrode active material is applied. The positive electrode plate 112 may include a positive uncoated portion that is a region to which the positive electrode active material is not applied.

The positive electrode plate 112 may include a positive electrode tab 115 electrically connected to the positive uncoated portion. In some embodiments, when the positive electrode plate 112 is manufactured, the positive electrode tab 115 may be formed by being cut in advance to protrude to one side of the electrode assembly 110, or the positive electrode tab 115 may protrude to one side of the electrode assembly 110 more than (e.g., farther than or beyond) the separator 113 without being separately cut. The positive electrode tab 115 may include or be referred to as a second substrate tab, a second electrode tab, or a second collector tab.

As the positive electrode active material, which is the second active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹aGₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G₈O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al).

In some examples, as illustrated in FIGS. 1-3, an electrode lead 130 may be included to electrically connect the negative electrode tab 114 and the positive electrode tab 115 to the outside. The electrode lead 130 may be connected to each of the negative electrode tab 114 and the positive electrode tab 115. That is, the electrode lead 130 may include a negative electrode lead 131 and a positive electrode lead 132. The negative electrode tab 114 and the positive electrode tab 115 are respectively welded to the negative electrode lead 131 and the positive electrode lead 132 of an external terminal to be electrically connected to the outside. A tab film 135 for insulation from the pouch 120 is attached to the negative electrode lead 131 and the positive electrode lead 132.

The separator 113 is interposed between the negative electrode plate 111 and the positive electrode plate 112 to prevent an electrical short between the negative electrode plate 111 and the positive electrode plate 112. In implementation, a pair of separators 113 may be provided, and the negative electrode plate 111 or the positive electrode plate 112 may be sandwiched between a pair of separators 113.

Depending on the type of lithium secondary battery, the separator 113 may be present between the negative electrode and the positive electrode. As the separator 113, polyethylene, polypropylene, polyvinylidene fluoride, or a multilayer film of two or more layers thereof may be used.

The separator 113 may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof.

The organic material and the inorganic material may be mixed in one coating layer or may be in the form of a coating layer containing an organic material and a coating layer containing an inorganic material that are laminated on each other.

In a state in which the electrode assembly 110 is accommodated in the pouch 120, sealing parts 124 of edges of the pouch 120 come into contact with each other (e.g., the sealing parts 124 around the periphery of the bottom portion of the pouch 120 come into contact with a corresponding peripheral area of the top potion (e.g., a cover) of the pouch 120) to be sealed. The sealing is performed in a state in which the tab film 135 is disposed between the sealing parts 124. As shown in FIG. 1, the form in which the tab film 135 is attached to each of the negative electrode tab 114 and the positive electrode tab 115 is defined as a "separable tab film" (e.g., this sealing structure is referred to as a separable sealing structure).

The sealing parts 124 at the bottom portion of the pouch 120 as well as the top portion (e.g., the entire cover or at least the peripheral area of the cover) may be made of a heat-fusible material and may have a structure in which sealing is achieved by bonding heat-fusible layers to each other. Because the heat-fusible material generally has weak adhesion to metal, the tab film 135 in the form of a thin film is attached to a tab to be fused to the pouch 120. However, in the separable sealing structure, the tab film 135 is attached to the negative electrode lead 131 and the positive electrode lead 132 and then welded thereto, followed by being heat-fused with the pouch 120, and thus, workability and productivity may be improved. The pouch 120 has an internal space and may accommodate the electrode assembly 110 in the internal space.

The pouch 120 may include or be referred to as a case, can, outer casing, or housing. In some examples, the pouch 120 may be provided as a laminate structure having, for example, a first insulating layer, a metal layer, and a second insulating layer.

In some examples, the pouch 120 may include a first outer casing 121 and a second outer casing 122. The second outer casing 122 may have a recess 123 of a certain depth to accommodate the electrode assembly 110, and one end of the second outer casing 122 may be connected to the first outer casing 121. The recess 123 may include or be referred to as a receiving portion. In some examples, the perimeters of the first and second outer casings 121 and 122 corresponding to the outer perimeter of the electrode assembly 110 are heat-welded to each other, and thus the electrode assembly 110 may be accommodated inside the pouch 120, roughly of a pouch or pocket type.

In some examples, the pouch 120 may be provided as an integrally formed rectangular plate, which is then folded in the middle along one of long sides thereof, so as to form the first outer casing 121 and the second outer casing 122. The second outer casing 122 may be provided with the recess 123 of a certain depth, formed through processes such as pressing or drawing, to accommodate the electrode assembly 110, and the sealing part 124 for sealing with the first outer casing 121 may also be provided on the outer perimeter of the recess 123. The sealing part 124 may be provided along one edge where the first outer casing 121 and the second outer casing 122 are integrally joined, and along all three remaining edges. In some examples, the sealing parts 124 on the two edges, other than the edge where the negative electrode tab 114 and the positive electrode tab 115 are located, and the edge where the first outer casing 121 and the second outer casing 122 are integrally joined, may include or be referred to as a wing part.

In some examples, the pouch 120 may be made of steel, stainless steel, nickel-plated steel or a steel alloy.

In some examples, the electrode assembly 110 and the pouch 120 may form an "L"-shaped irregular secondary battery. The electrode assembly 110 may be "L"-shaped, and the pouch 120, which encloses the exterior of the electrode assembly 110, may also be "L"-shaped, corresponding to the electrode assembly. The shapes of the electrode assembly 110 and the pouch 120 may be varied into diverse forms, such as the shapes of being bent multiple times.

The secondary battery 100 according to an embodiment may be a pouch-type secondary battery that can efficiently utilize internal spaces without the need for a process of folding electrode tabs. The secondary battery 100 may be usefully applied to applications requiring ultra-thin batteries, such as foldable electronic devices.

With the advancement of cutting-edge electronic devices such as foldable phones, battery thinning is accelerating. As the thickness of a battery pack becomes extremely reduced, it may be difficult to apply the process of folding and arranging electrode tabs internally when manufacturing pouch-type secondary batteries. For example, in a typical pouch-type secondary battery, positive and negative electrode tabs are each connected to welded electrode leads, and then the tabs and leads are folded once or twice at right angles or in a V-shape and inserted into a pouch bag. By folding the electrode tabs and leads in this way, the upper space of the battery may be utilized and the active area of the electrode assembly may be maximized. However, in the trend toward ultra-thinning where battery cell thicknesses decrease to approximately 2 mm or less, it may be difficult to secure sufficient space for bending, making it difficult to apply the process of bending electrode tabs. Therefore, for ultra-thin batteries, such as those used in foldable phones, there is a demand for technology that enables assembling without bending the electrode tabs/leads.

Meanwhile, when an electrode tab is inserted into a pouch straight without bending (unbent insertion), an unused empty space may be created between the electrode assembly and the pouch sealing film. That is, if bending is omitted, the electrode tab extends vertically directly to the outside of the pouch, leaving the upper space, which would have been filled by folding the tab, unfilled with an electrode active portion. This internal empty space immediately reduces battery capacity, lowering energy density. In other words, although a typical unbent insertion pouch battery is simple to manufacture, it may have reduced battery capacity due to low internal space utilization.

Attempts have been made to reduce capacity loss by changing the shape of an electrode plate around an electrode tab. For example, the current collector capacity of an electrode may be maximized by eliminating a V-forming bending process of an electrode tab. That is, an extension part, which is a portion of an electrode plate extending to an electrode tab side, may be formed to fill the internal space without bending the electrode tab. However, such an extension part has limitations in terms of shape and arrangement, which may prevent the full utilization of the internal space of the pouch or cause separator wrinkles or interference with adjacent electrodes during an actual assembling process (e.g., since there is no specific design for the gap around the extension part, corner shape, etc.),

In contrast, according to an embodiment in the present disclosure, the internal space in the pouch 120 is maximized through a protrusion part with an improved shape and arrangement, while at the same time ensuring stability and reliability in battery manufacturing. That is, in the present disclosure, referring to FIG. 3, it is possible to prevent battery capacity degradation by effectively utilizing the remaining space within a pouch cell while omitting the electrode tab bending process. Specifically, it is possible to overcome the structural constraints of not being able to bend electrode tabs in ultra-thin pouch-type secondary batteries used in foldable phones, etc., and is possible to improve energy density by maximally filling the idle space around the electrode assembly. In some embodiments, the risk of short circuits between adjacent electrodes or damage to the separator due to a protruding electrode plate structure may be eliminated, and a structure that can be implemented without any special difficulties in the manufacturing process may be provided.

In detail, referring to FIG. 3, the electrode assembly 110 of the secondary battery 100 according to the embodiment of the present disclosure may be formed such that the negative electrode tab 114 and the positive electrode tab 115, as well as the negative electrode lead 131 and the positive electrode lead 132, are all formed in a straight line without being bent during the manufacturing process. In the secondary battery 100 of an embodiment, the negative electrode lead 131 and the positive electrode lead 132 connected to the negative electrode tab 114 and the positive electrode tab 115 from the electrode assembly 110 may be drawn out of the pouch. The present disclosure provides a structure in which an electrode tab is inserted without being bent (unbent) to address manufacturing difficulties caused by battery thinning. That is, the electrode assembly 110 of the present disclosure allows electrode tabs to be disposed outside a pouch without a separate bending process, reducing manufacturing difficulty and stress concentration associated with tab bending.

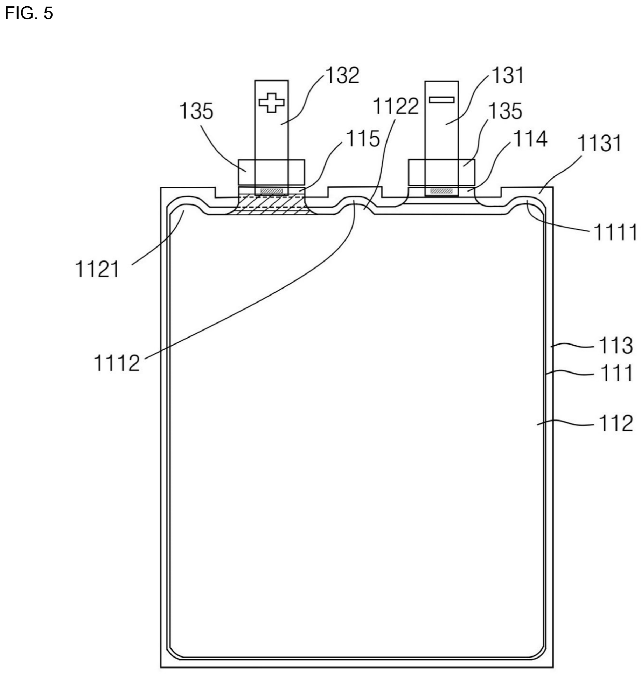

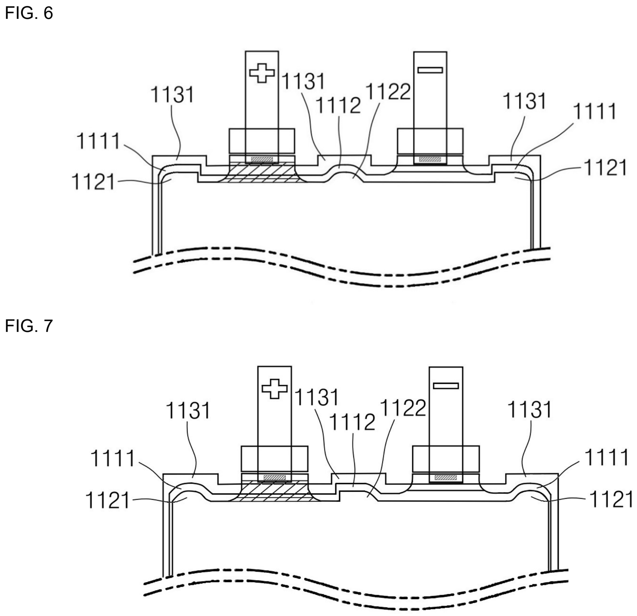

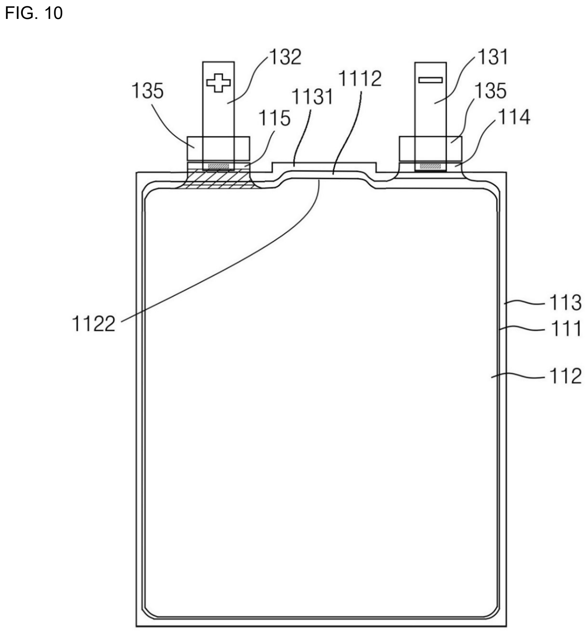

FIG. 4 is a plan view showing the electrode assembly 110 according to an embodiment, FIG. 5 is a plan view showing the electrode assembly 110 with the negative electrode lead 131 and the positive electrode lead 132 according to an embodiment, FIGS. 6 to 9 are plan views showing the shapes of protrusion parts according to various embodiments, and FIGS. 10 to 13 are plan views showing the positions of electrode tabs and protrusion parts according to various embodiments.

FIG. 4 shows the electrode assembly 110 having the negative electrode tab 114 and the positive electrode tab 115, and FIG. 5 shows the electrode assembly 110 having the negative electrode tab 114 and the positive electrode tab 115 with the negative electrode lead 131 and the positive electrode lead 132 connected thereto, respectively. Since the protrusion structures of the electrode assemblies 110 of FIGS. 4 and 5 are implemented in the same manner, the following description will be given with reference to FIG. 4. In each drawing, components are schematically illustrated for clarity of explanation, and in some cases, thicknesses or dimensions are exaggerated or reduced for clarity.

FIGS. 4 to 13 illustrate specific examples of the secondary battery 100 to which the unbent electrode assembly 110 of the present disclosure is applied. This electrode assembly 110 may include the negative electrode plate 111, the positive electrode plate 112, and the separator 113 electrically separating the two electrode plates while allowing ions to pass therethrough. The electrode assembly 110 including a plurality of negative electrode plates 111, a plurality of positive electrode plates 112, and separators 113 interposed between the negative electrode plates 111 and the positive electrode plates 112 may be formed, e.g., by stacking or winding. In some embodiments, each of the negative electrode plate 111 and the positive electrode plate 112 may have a slightly smaller area than the separator 113 or may be formed to be offset from each other, creating a step difference at the edges thereof (e.g., a gap or a predetermined distance may be formed or defined between corresponding outermost edges of the negative electrode plate 111, the positive electrode plate 112, and the separator 113).

In some examples, the gap between the side end of the positive electrode plate 112 and the side end of the negative electrode plate 111 (e.g., between corresponding outermost edges of the positive and negative electrode plates 112 and 111 in the X-axis direction) may be approximately 0.1 mm to 0.6 mm. In some examples, the gap between the side end of the negative electrode plate 111 and the side end of the separator 113 (e.g., between corresponding outermost edges of the negative electrode plate 111 and the separator 113 in the X-axis direction) may be approximately 0.3 mm to 1.3 mm. That is, the separator 113 may be configured to protrude approximately 0.3 mm to 1.3 mm to the left and right of the negative electrode plate 111. In some embodiments, the negative electrode plate 111 may be formed to be approximately 0.1 mm to 0.6 mm larger in the left-right direction than the positive electrode plate 112. These ranges of the gaps between components may be to prevent edge shorting of the electrodes and to ensure adequate separation.

The electrode assembly 110 may include at least one protrusion part provided in the area surrounding the negative electrode tab 114 and the positive electrode tab 115, extending and protruding from a base edge line to a protrusion line. For example, referring to FIG. 4, each of the negative electrode plate 111, the positive electrode plate 112, and the separator 113 may include a protrusion part protruding from a linear edge of a corresponding one of the negative electrode plate 111, the positive electrode plate 112, and the separator 113 in a same direction as the negative and positive electrode tabs 114 and 115, such that the protrusion part surrounds the negative electrode tab 114 and the positive electrode tab 115.

For example, referring to FIG. 4, the protrusion part may include a negative electrode protrusion part 1111 protruding beyond a negative base edge line BLa of the negative electrode plate 111, a positive electrode protrusion part 1121 protruding beyond a positive base edge line BLc of the positive electrode plate 112, and a separator protrusion part 1131 protruding beyond a separator base edge line BLs of the separator 113. In other words, in the case of the negative electrode plate 111, negative electrode protrusion parts 1111, 1112 may be formed around the area where the negative electrode tab 114 extends. Similarly, in the case of the positive electrode plate 112, positive electrode protrusion parts 1121 and 1122 may also be formed around the positive electrode tab 115. In some embodiments, even in the case of the separator 113, a separator protrusion part 1131 may be formed around the area where the negative electrode tab 114 and the positive electrode tab 115 extend. In some examples, The negative electrode protrusion parts 1111 and 1112 and the positive electrode protrusion parts 1121 and 1122 may overlap at the same position and be configured in the same shape, respectively. In some examples, the separator protrusion part 1131 may be formed at the positions of the negative electrode protrusion parts 1111 and 1112 and the positive electrode protrusion parts 1121 and 1122 to cover the same. Since these negative electrode protrusion parts 1111 and 1112 and positive electrode protrusion parts 1121 and 1122 are shaped to protrude beyond the base edge lines of the respective electrode plates, additional electrode area may be secured within the electrode assembly 110 compared to a comparative rectangular electrode plate structure without protrusion parts.

Referring to FIG. 4, the negative electrode tab 114 and the positive electrode tab 115 protrude from the upper edge of the electrode assembly 110 (e.g., in the Y-axis direction) and may be formed at positions spaced apart from each other (e.g., in the X-axis direction). For example, in FIG. 4, the positive electrode tab 115 may be disposed in the vicinity of the left upper end of the electrode assembly 110, and the negative electrode tab 114 may be disposed in the vicinity of the right upper end of the electrode assembly 110. Since the positive electrode tab 115 and the negative electrode tab 114 are spaced apart from each other by a certain distance, there may be no tabs in the middle section of the upper end edges therebetween (e.g., between the positive and negative electrode tabs 115 and 114 in the upper center area of the electrode assembly 110). In some embodiments, since the positive electrode tab 115 and the negative electrode tab 114 are positioned within a certain distance from the left and right edges of the electrode assembly 110, respectively, there may be no tabs in the section between each of the left and right edges of the electrode assembly 110, and a corresponding one of the positive electrode tab 115 and the negative electrode tab 114, respectively. That is, in some examples, one or more protrusion parts (e.g., the negative electrode protrusion part 1111, the positive electrode protrusion part 1121, and the separator protrusion part 1131) may be formed in upper end sections where there are no tabs. For example, referring to FIG. 4, the negative electrode protrusion part 1111, the positive electrode protrusion part 1121, and the separator protrusion part 1131 may be formed in upper end sections of the electrode assembly 110 in a region between the positive and negative electrode tabs 115 and 114 and/or in a region between each of the positive and negative electrode tabs 115 and 114 and a corresponding one of the left and right edges of the electrode assembly 110.

As shown in FIG. 4, a total of three protrusion parts 1111, 1121, and 1131 may be formed around the negative electrode tab 114 and the positive electrode tab 115 at the upper end of the electrode assembly 110. For example, one protrusion part may be disposed in the middle region between the negative electrode tab 114 and the positive electrode tab 115, and each of the remaining two protrusion parts may be disposed in the space between one of the upper end corners (left and right ends) of the electrode assembly 110 and a corresponding one of the positive electrode tab 115 and the negative electrode tab 114, respectively. Here, one protrusion part 1112, 1122 disposed in the middle area between the negative electrode tab 114 and the positive electrode tab 115 is shown with a different reference number to distinguish the same from the left and right protrusion parts 1111 and 1121, but this is for convenience of explanation and can be implemented in the same and/or similar manner. In the case of the separator protrusion part 1131, the same reference number is used because there is no need to distinguish the separator protrusion part located in the center from the protrusion parts located on the left and right sides. In this configuration, each negative electrode protrusion part 1111 and the positive electrode protrusion part 1121 may be covered by the separator protrusion part 1131, and the end of each protrusion part 1111, 1121 may be located above the base edge line BL of the electrode tab 114, 115 of the corresponding protrusion part 1111, 1121. This allows the protrusion part 1111, 1121 to reach and fill the space remaining around the tab, thereby significantly reducing the upper empty space of the electrode assembly 110.

In some examples, the negative electrode base edge line BLₐ and the negative electrode protrusion part edge line ELₐ refer to an uncoated portion line (i.e., a line separating a coating area from a non-coating area) of the negative electrode plate 111 and a virtual line from the uppermost end of the negative electrode protrusion part 1111, respectively. Similarly, the positive electrode base edge line BL_{c} and the positive electrode protrusion part edge line EL_{c} refer to an uncoated portion line of the positive electrode plate 112 and a virtual line from the uppermost end of the positive electrode protrusion part 1121, respectively. The separator base edge line BLₛ and the separator protrusion part edge line ELₛ refer to a non-protrusion line and a protrusion line of the separator 1113.

In some examples, the protrusion lengths of the negative electrode protrusion part 1111, the positive electrode protrusion part 1121, and the separator protrusion part 1131 may be smaller than the protrusion lengths of the negative electrode tab 114 and the positive electrode tab 115. The protrusion lengths of the negative electrode protrusion part 1111, the positive electrode protrusion part 1121, and the separator protrusion part 1131 refer to the lengths (e.g., in the Y-axis direction) from the base edge lines BLₐ, BL_{c}, and BLₛ to the protrusion edge lines ELₐ, EL_{c}, and ELₛ, respectively. Since the negative electrode protrusion part 1111 and the positive electrode protrusion part 1121 are extensions of respective active parts of the negative electrode plate 111 and the positive electrode plate 112, respectively, the lengths of the negative and positive electrode protrusion parts 1111 and 1121 may be formed to be smaller than the length of a tab for internal electrode connection. Thus, the negative and positive electrode protrusion parts 1111 and 1121 may not be so large as to extend beyond the positions of the negative electrode tab 114 and the positive electrode tab 115. In this way, by limiting the length of the protrusion part (i.e., the negative electrode protrusion part 1111, the positive electrode protrusion part 1121, and the separator protrusion part 1131) in this way, the protrusion part may serve to fill the idle space inside the electrode assembly 110 while not interfering with the connection or packaging process of the negative electrode tab 114 and the positive electrode tab 115.

In some examples, a separation distance between the negative electrode tab 114 and the negative electrode protrusion part 1111 and a separation distance between the positive electrode tab 115 and the positive electrode protrusion part 1112 may be approximately 2.0 mm or more. Since there are a weld portion and a collector non-active area near each of the negative and positive electrode tabs 114 and 115, it is desirable to secure a gap (i.e., a separation distance) of at least approximately 2.0 mm or more between an edge of the protrusion part and a center of a tab (i.e., a distance along the X-axis direction between an edge of a protrusion part closest to and facing an electrode tab and a center of the electrode tab adjacent to the protrusion part). This may prevent the protrusion part from physically interfering with or electrically contacting the electrode tab or a lead thereof.

In some examples, a gap between the protrusion end ELₛ of the separator protrusion part 1131 and the protrusion end ELₐ of the negative electrode protrusion part 1111 may be approximately 1 mm to 2 mm (e.g., in the Y-axis direction). In other words, the uppermost end of the negative electrode protrusion part 1111 may be positioned approximately 1 mm to 2 mm below the end of the separator protrusion part 1131 covering the same.

In some examples, a gap between the protrusion end ELₐ of the negative electrode protrusion part 1111 and the protrusion end EL_{c} of the positive electrode protrusion part 1121 may be approximately 0.9 mm to 1.4 mm (e.g., in the Y-axis direction). That is, the negative electrode plate 111 of the protrusion part may be formed to be approximately 0.9 mm to 1.4 mm larger in the vertical direction than the positive electrode plate 112. This gap range between the components may be for preventing edge shorting of the electrodes and to ensure adequate separation. The above-stated dimensions are presented as examples and may be appropriately adjusted depending on the thickness of the electrode assembly 110, the thickness of separator used, etc.

In some examples, the negative electrode protrusion part 1111 may be disposed slightly below the end of the separator protrusion part 1131, and the positive electrode protrusion part 1121 may be disposed further below the negative electrode protrusion part 1111, so that they may be spaced apart in stages. Through this structure, the respective protrusion parts 1111, 1121, and 1131 are stably stacked while being insulated from each other, and sufficient separation margin is secured around the protrusion parts 1111, 1121, and 1131, thereby preventing the risk of an internal short circuit in the battery.

FIGS. 6 to 9 schematically show examples of shape modifications of the negative electrode protrusion part 1111, 1112 and the positive electrode protrusion part 1121, 1122. The negative electrode protrusion part 1111, 1112 and the positive electrode protrusion part 1121, 1122 may be disposed along the upper end edge of the electrode assembly 110. For example, the negative electrode protrusion part 1111 and the positive electrode protrusion part 1121 positioned at the upper left and right ends, and the negative electrode protrusion part 1112 and the positive electrode protrusion part 1122 positioned at the upper center, may be formed. In some examples, the corners on both sides of the negative electrode protrusion part 1111 and the positive electrode protrusion part 1121 may be formed into a round shape or a right-angled shape, and when formed into a round shape, the radius of curvature R may be set to be in a range of approximately 0.5 mm to 5 mm. The smaller the radius of curvature R value, the more angular the corner remains, and the larger the radius of curvature R value, the more gently the corner is rounded, effectively suppressing interference with a pouch or case. An appropriate the radius of curvature R value may be selected by comprehensively considering pouch insertion interference, active material loss, mechanical rigidity of corner, etc.

The overall outline of the protrusion parts of the negative electrode protrusion parts 1111 and 1112 and the positive electrode protrusion parts 1121 and 1122 may be implemented in a round shape such as a semicircle, and an asymmetrical structure may also be formed by combining the left and right corners with different shapes. In particular, the protrusion parts 1111 and 1121 positioned at the upper left and right ends of the electrode assembly 110 may have the end corners implemented in a round shape to prevent interference with the inner wall of the pouch 120. In other words, the protrusion parts 1111 and 1121 positioned at the upper left and right ends of the electrode assembly 110 (parts that are highly likely to come into direct contact with the pouch or case) may have the end corners formed in a round shape to prevent the same from touching an external film or case. However, the inner corner facing inward of the electrode assembly 110 may be arbitrarily selected as either a round or a right angle in consideration of the space utilization between the electrode plates or the ease of processing.

As shown in FIG. 6, the left and right protrusion parts 1111 and 1121 may be formed with a round outer corner and a right-angled inner corner, and the central protrusion part 1112, 1122 may be formed as a semicircular structure with both left and right corners rounded.

As shown in FIG. 7, the left and right protrusion parts 1111 and 1121 are semicircular with both corners rounded, and the central protrusion part 1112, 1122 may be formed in an asymmetrical shape with the left corner being right-angled and the right corner being rounded.

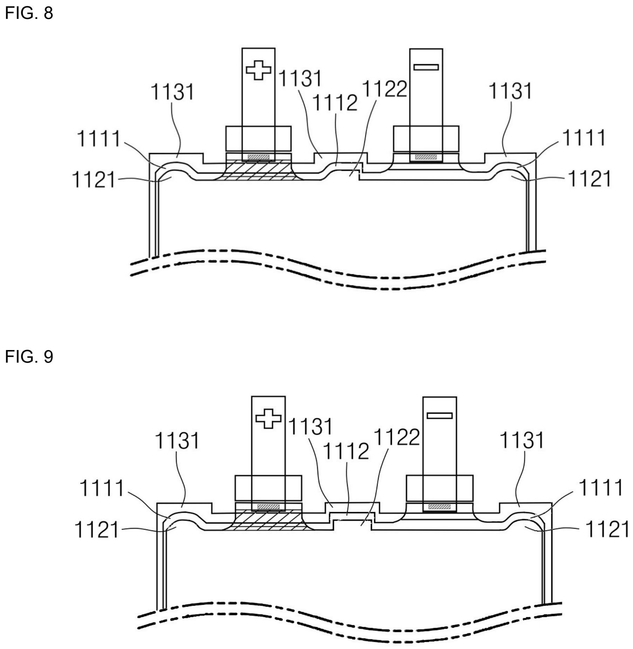

As shown in FIG. 8, the left and right protrusion parts 1111 and 1121 are semicircular in shape with both corners rounded, as in FIG. 7, and the central protrusion part 1112, 1122 may be formed in an asymmetrical shape with the left corner rounded and the right corner right-angled.

As shown in FIG. 9, the left and right protrusion parts 1111 and 1121 are semicircular in shape with both corners rounded, similar to FIG. 7, and the central protrusion part 1112, 1122 may be formed as a symmetrical right-angled structure in which both left and right corners are formed at right angles.

In this way, the corner shapes of the negative electrode protrusion part 1111, 1112 and the positive electrode protrusion part 1121, 1122 may be selectively changed according to design requirements such as preventing damage to the pouch during cell insertion, alleviating separator wrinkles, and optimizing the active area.

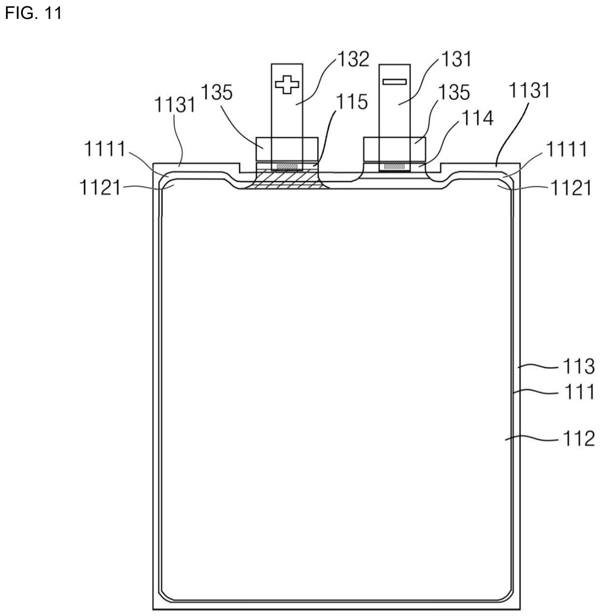

FIGS. 10 and 11 show various arrangements of the negative electrode tab 114 and the positive electrode tab 115.

FIG. 10 shows a configuration in which the negative electrode tab 114 and the positive electrode tab 115 are the same in view of basic structure of being positioned at an upper end, while having one protrusion part 1112, 1122, 1131, in which the negative electrode tab 114 and the positive electrode tab 115 are positioned on both sides of the upper end, and the protrusion part 1112, 1122, 1131 is disposed between the negative electrode tab 114 and the positive electrode tab 115. That is, one protrusion part 1112, 1122, 1131 (e.g., only one protrusion part ) may be positioned around (e.g., adjacent to) the negative electrode tab 114 and the positive electrode tab 115. The corners of this protrusion part 1112, 1122 may be implemented in a rounded or square shape.

The configuration of a single protrusion part, according to the present embodiment, is simple in structure, making it convenient for punching or laser cutting an electrode plate and reducing defects. Although the additional area secured is limited, the configuration may be useful in cases where even a small amount of capacity needs to be supplemented in extreme space constraints, such as foldable phone batteries.

FIG. 11 shows a configuration in which the negative electrode tab 114 and the positive electrode tab 115 are the same in view of basic structure of being positioned at an upper end, while having two of the protrusion parts 1111, 1121, and 1131, in which the negative electrode tab 114 and the positive electrode tab 115 are positioned at the center, and the protrusion parts 1111, 1121, and 1131 are each disposed at both ends. That is, two of the protrusion parts 1111, 1121, and 1131 may be positioned around the negative electrode tab 114 and the positive electrode tab 115. One protrusion part 1111, 1121, 1131 is formed upward at the upper left end of the electrode assembly 110, and another protrusion part 1111, 1121, 1131 is formed upward at the upper right end. There is no protrusion part at the center between the negative electrode tab 114 and the positive electrode tab 115, and the middle area between the negative electrode tab 114 and the positive electrode tab 115 allows the electrode plates to be maintained with straight edges. Two protrusion parts 1111 and 1121 are positioned at the left and right ends, and thus the left and right (outer) corners may be formed in a round shape, thereby preventing edge interference when inserting the pouch. The separator protrusion part 1131 may have a square corner regardless of the position thereof.

Configuring two protrusion parts may be effective when a tab is disposed relatively close to the center. In the present embodiment, the positive electrode tab 115 and the negative electrode tab 114 are slightly gathered toward the center of the upper end edge, and a considerable clearance may be created at the left and right ends. In this case, since it is difficult to place the protrusion part 1111, 1121, 1131 at the center (because the spacing between tabs is narrow), the capacity may be supplemented instead by adding protrusion parts 1111, 1121, and 1131 to the left and right margin areas, respectively.

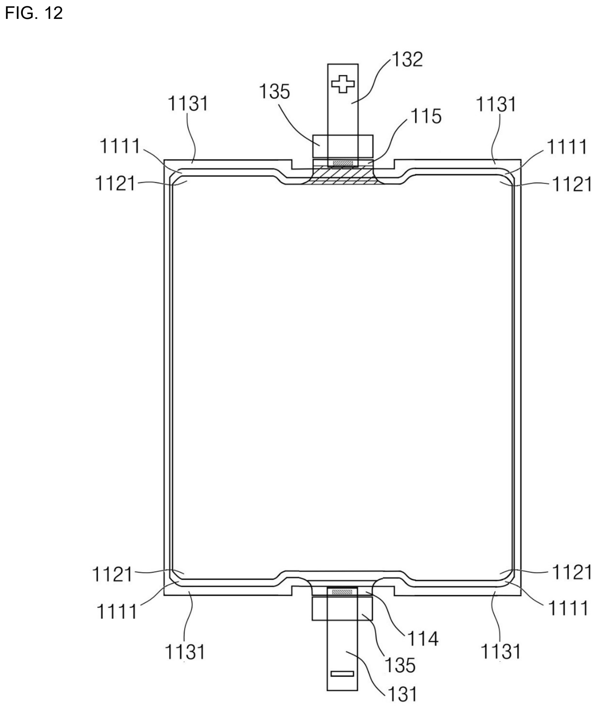

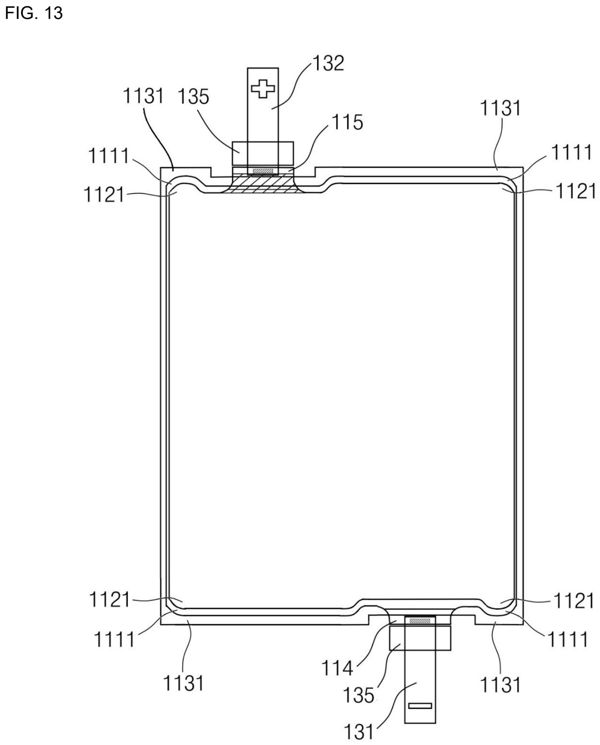

FIGS. 12 and 13 show an embodiment in which the negative electrode tab 114 and the positive electrode tab 115 are disposed in opposite directions (e.g., at the upper and lower sides facing each other). Referring to FIGS. 12 and 13, the positive electrode tab 115 may be disposed on the upper side of the electrode assembly 110, and the negative electrode tab 114 may be disposed on the lower side of the electrode assembly 110. Even in this structure, in order to utilize the space around each tab, protrusion parts 1111, 1121, and 1131 may be formed.

Referring to FIG. 12, the negative electrode tab 114 and the positive electrode tab 115 may be positioned at the center of each side. The negative electrode tab 114 and the positive electrode tab 115 may be positioned in a straight line, e.g., to be aligned with each other. One positive electrode protrusion part 1121 may be disposed on the left and right sides of the upper end edge centered on the positive electrode tab 115 on the upper side. In some embodiments, one negative electrode protrusion part 1111 may be disposed on the left and right sides of the lower edge centered on the negative electrode tab 114 on the lower side.

Referring to FIG. 13, the negative electrode tab 114 and the positive electrode tab 115 may not be positioned at the center but rather offset to the sides on each side of the electrode assembly 110. For example, the negative electrode tab 114 may be disposed offset to the right on the lower side, and the positive electrode tab 115 may be disposed offset to the left on the upper side. That is, the negative electrode tab 114 and the positive electrode tab 115 may not be positioned on the same line. One positive electrode protrusion part 1121 may be disposed on each of the left and right sides of the upper end edge, centered on the positive electrode tab 115 on the upper side. Since the positive electrode tab 115 is offset to the left, the positive electrode protrusion part 1121 on the right side may be wider than the positive electrode protrusion part 1121 on the left side. Similarly, the negative electrode protrusion part 1111 may be disposed one on each side of the lower end edge, centered on the negative electrode tab 114 on the lower side. Since the negative electrode tab 114 is offset to the right side, the negative electrode protrusion part 1111 on the left may be wider than the negative electrode protrusion part 1111 on the right side. According to embodiments, the positive electrode protrusion part 1121 on the left side and the negative electrode protrusion part 1111 on the right side may be omitted, and only one protrusion part may be formed on the right and left sides of the positive electrode tab 115 and the negative electrode tab 114. Of course, as necessary, asymmetrical implementations may also be possible, in which, for example, two protrusion parts are disposed on the upper side and only one protrusion part is disposed on the lower side.

In this way, even when the tabs are in opposing locations, by forming protrusion parts in the unused space around each tab, the internal volume can be utilized, and the number or positions thereof may be set differently according to the design conditions. In any arrangement, the protrusion length of a protrusion part is maintained to be shorter than that of the corresponding tab, thereby preventing the protrusion part from interfering with sealing of a pouch.

As described above, the present disclosure may minimize battery capacity degradation by efficiently filling internal empty spaces in a secondary battery in which an electrode tab is not bent. Since even the space typically left empty around the tab is actively utilized through a protrusion part of an electrode plate, energy density is improved, allowing more charges to be stored within the same volume. In particular, even in cases with extreme limitations on battery thickness, such as for foldable phones, assembling becomes possible without a separate bending process, the manufacturing process is simplified, and production yields are improved. Because an electrode tab/lead is not bent, mechanical stress at the tab weld area is reduced, thereby improving reliability and durability during long-term charging and discharging. In some embodiments, by carefully designing the shape and layout of protrusion parts, sufficient insulation distances may be secured between protrusion parts and between protrusion parts and tabs, thereby preventing the risk of electrical short circuits. By ensuring that the separator completely covers the protrusion parts, internal short circuits within the cell caused by active material protrusion can be suppressed, and by rounding off the corners of the protrusion parts, damage to the separator or a pouch film can be prevented. As a result, the secondary battery of the present disclosure can simultaneously achieve high capacity and stability. Furthermore, the number, position, and shape of the protrusion parts can be diversified, which increases product design flexibility, and allows the electrode assembly to be optimized for specific applications (e.g., the shape of a foldable phone battery).

In some embodiments, as another embodiment of the present disclosure, it may be possible to vary the material of the protrusion part or the configuration of the electrode assembly. For example, methods such as etching the electrode plate portion having the protrusion part slightly thinner than other portions, or changing the electrode density of the protrusion part by adjusting the amount of active material applied, can also be taken into consideration. This allows optimization of the electrochemical properties of the protrusion part area and improvement of thermal stability. In some embodiments, by configuring the protrusion part on only one of the negative electrode plate and the positive electrode plate, it may also be possible to configure the arrangement of protrusion parts within a cell differently for each layer, such as by alternately stacking electrode plates having no protrusion parts at all and electrode plates having protrusion parts.

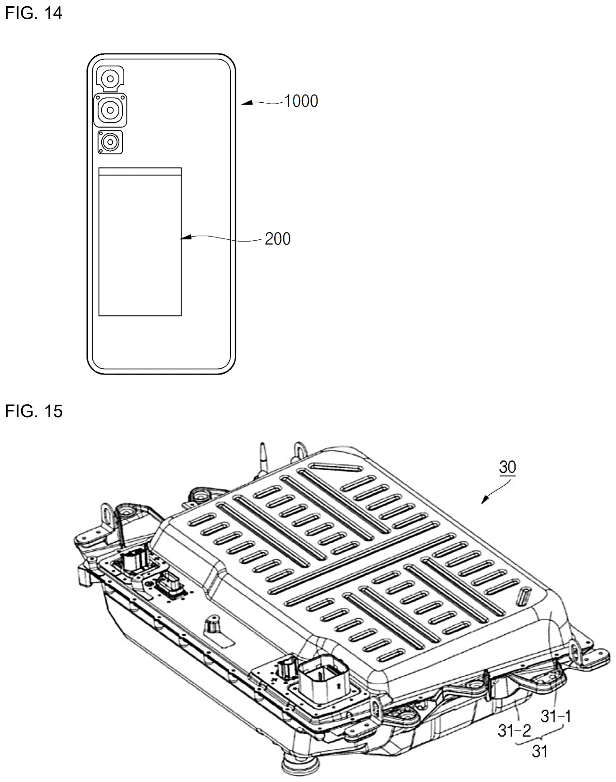

FIG. 14 is a view schematically showing a smartphone 1000 equipped with a secondary battery 200 according to an embodiment of the present disclosure. As shown in FIG. 14, a secondary battery 200 according to the above-described embodiment of the present disclosure may be a small battery mounted in a small portable device such as a smartphone 1000. The secondary battery 200 may be identical or similar to the above-described secondary battery 100. In this case, because the exemplary secondary battery 200 is configured to be able to increase the capacity thereof while having a slim internal structure, the above-described secondary battery 200 may be a battery suitable for application to small portable devices. As used herein, the terms "secondary battery pack" and "battery" have the same meaning and are different only in expression for convenience of description.

In some embodiments, the secondary battery 200 according to the above-described embodiment may include a single cell, but may be used to manufacture a battery pack including a plurality of cells or to manufacture a larger battery pack by increasing the sizes of the battery cells.

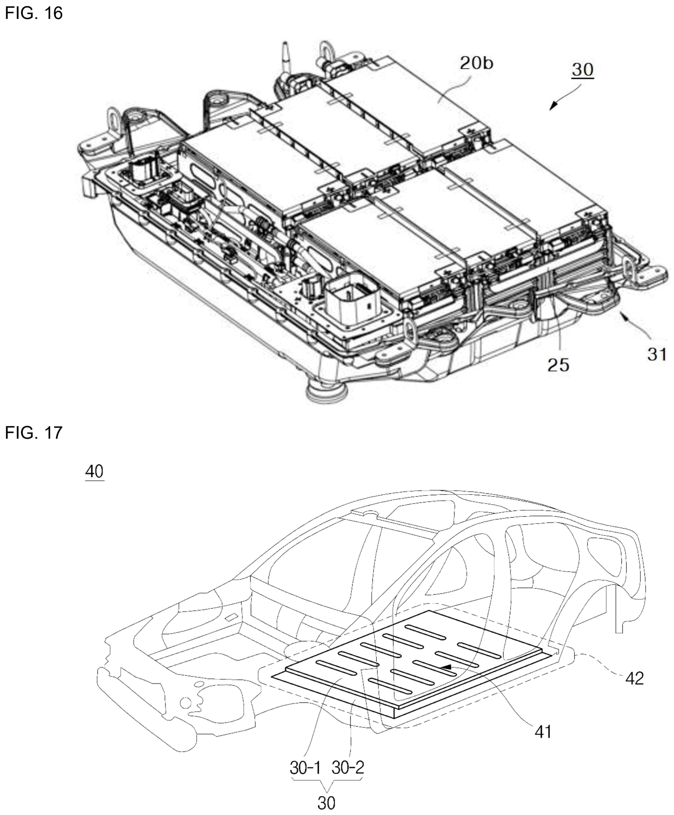

FIGS. 15 and 16 are perspective views showing an exemplary battery pack 30. The battery pack 30 may include a plurality of battery modules 20b and a housing 31 for accommodating the plurality of battery modules 20b. For example, the housing 31 may include first and second housings 31-1 and 31-2 coupled in opposite directions through the plurality of battery modules 20b. The plurality of battery modules 20b may be electrically connected to each other by using a bus bar 25, and the plurality of battery modules 20b may be electrically connected to each other in a series/parallel or series-parallel mixed method, thereby obtaining required electrical output.

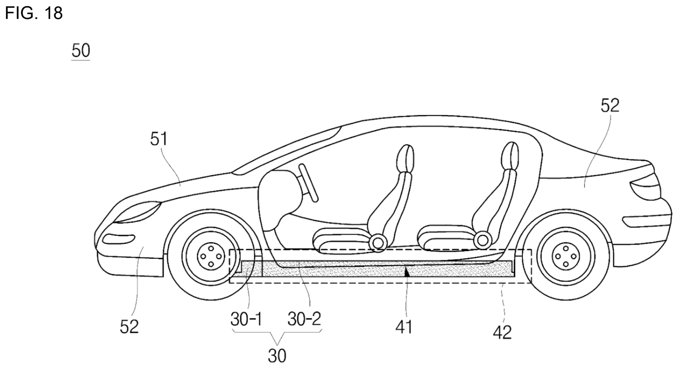

FIGS. 17 and 18 illustrate perspective and side views of examples of a vehicle body 40 and a vehicle components. In FIG. 17, a battery pack 30 may include a battery pack cover 30-1, which is a part of a vehicle underbody 41, and a pack frame 30-2 located under the vehicle underbody 41. In some examples, the battery pack cover 30-1 may correspond to the first housing 31-1, and the pack frame 30-2 may correspond to the second housing 31-2. The pack frame 30-2 and the battery pack cover 30-1 may be integrally formed with a vehicle floor 42. The vehicle underbody 41 separates the inside and outside of a vehicle, and the pack frame 30-2 may be located outside the vehicle.

Referring to FIG. 18, a vehicle 50 may be formed by combining additional parts, such as a hood 51 in front of the vehicle and fenders 52 respectively located in the front and rear of the vehicle to a vehicle body 40. The vehicle 50 may include the battery pack 30 that include the battery pack cover 30-1 and the pack frame 30-2, and the battery pack 30 may be coupled to the vehicle body 40.

By way of summation and review, the present disclosure provides a secondary battery capable of minimizing battery capacity degradation by efficiently filling internal empty spaces in a secondary battery in which an electrode tab is not bent. That is, according to the present disclosure, in a secondary battery in which an electrode tab is not bent, internal empty spaces can be efficiently filled to minimize battery capacity degradation. In some embodiments, since even the space typically left empty around the tab is actively utilized through a protrusion part of an electrode plate, energy density is improved, allowing more charges to be stored within the same volume. In particular, even in cases with extreme limitations on battery thickness, such as for foldable phones, assembling becomes possible without a separate bending process, the manufacturing process is simplified, and production yields are improved.

Although the present disclosure has been described with reference to embodiments and drawings illustrating aspects thereof, the present disclosure is not limited thereto. Various modifications and variations can be made by a person skilled in the art to which the present disclosure belongs. Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

1. A secondary battery (100, 200), comprising:
an electrode assembly (110) comprising a positive electrode plate (112), a negative electrode plate (111, 112), and a separator (113, 1113) between the positive electrode plate (112) and the negative electrode plate (111, 112);
a case accommodating the electrode assembly (110); and
a positive electrode substrate tab and a negative electrode substrate tab extending from the electrode assembly (110),
wherein:
the electrode assembly (110) further comprises at least one protrusion part (1111, 1112, 1121, 1122, 1131) in a region surrounding the positive electrode substrate tab and the negative electrode substrate tab, the at least one protrusion part (1111, 1112, 1121, 1122, 1131) comprising a positive electrode protrusion part protruding beyond a base edge line of the positive electrode plate (112), a negative electrode protrusion part protruding beyond a base edge line of the negative electrode plate (111, 112), and a separator protrusion part (1131) protruding beyond a base edge line of the separator (113, 1113), and
a protrusion length of each of the positive electrode protrusion part, the negative electrode protrusion part, and the separator protrusion part (1131) is smaller than a length of each of the positive electrode substrate tab and the negative electrode substrate tab.

2. The secondary battery (100, 200) as claimed in claim 1, wherein the protrusion length of the separator protrusion part (1131) is equal to or less than the length of each of the positive electrode substrate tab and the negative electrode substrate tab.

3. The secondary battery (100, 200) as claimed in claim 1 or 2, wherein corners of opposite sides of each of the positive electrode protrusion part and the negative electrode protrusion part are round or right-angled;
wherein preferably corners of the opposite sides of each of the positive electrode protrusion part and the negative electrode protrusion part are round, a radius of curvature of each of the corners being 0.5 mm to 5 mm.

4. The secondary battery (100, 200) as claimed in any one of the preceding claims, wherein:
a separation distance between the positive electrode substrate tab and the positive electrode protrusion part is at least 2.0 mm, and
a separation distance between the negative electrode substrate tab and the negative electrode protrusion part is at least 2.0 mm.

5. The secondary battery (100, 200) as claimed in any one of the preceding claims, wherein a gap between a protrusion end of the separator protrusion part (1131) and a protrusion end of the negative electrode protrusion part is 1 mm to 2 mm;
wherein preferably a gap between a protrusion end of the negative electrode protrusion part and a protrusion end of the positive electrode protrusion part is 0.9 mm to 1.4 mm;
wherein preferably a gap between a side end of the positive electrode plate (112) and a side end of the negative electrode plate (111, 112) is 0.1 mm to 0.6 mm;
wherein preferably a gap between a side end of the negative electrode plate (111, 112) and a side end of the separator (113, 1113) is 0.3 mm to 1.3 mm.

6. The secondary battery (100, 200) as claimed in any one of the preceding claims, wherein the positive electrode substrate tab and the negative electrode substrate tab extend in a same direction from a same side of the electrode assembly (110).

7. The secondary battery (100, 200) as claimed in claim 6, wherein the at least one protrusion part (1111, 1112, 1121, 1122, 1131) is between the positive electrode substrate tab and the negative electrode substrate tab.

8. The secondary battery (100, 200) as claimed in claim 6 or 7, wherein the at least one protrusion part (1111, 1112, 1121, 1122, 1131) is between the positive electrode substrate tab and one end of the electrode assembly (110), or between the negative electrode substrate tab and another end of the electrode assembly (110).

9. The secondary battery (100, 200) as claimed in any one of the claims 6 to 8, wherein:
the at least one protrusion part (1111, 1112, 1121, 1122, 1131) includes a plurality of protrusion parts (1111, 1112, 1121, 1122), and
the plurality of protrusion parts (1111, 1112, 1121, 1122) are between the positive electrode substrate tab and the negative electrode substrate tab, between the positive electrode substrate tab and one end of the electrode assembly (110), and between the negative electrode substrate tab and another end of the electrode assembly (110), respectively.

10. The secondary battery (100, 200) as claimed in any one of the preceding claims, wherein the positive electrode substrate tab and the negative electrode substrate tab extend in opposite directions from opposite sides of the electrode assembly (110).

11. The secondary battery (100, 200) as claimed in claim 10, wherein:
the at least one protrusion part (1111, 1112, 1121, 1122, 1131) includes a plurality of protrusion parts (1111, 1112, 1121, 1122), and
at least one protrusion part (1111, 1112, 1121, 1122, 1131) of the plurality of protrusion parts (1111, 1112, 1121, 1122) is on opposite sides of the positive electrode substrate tab, and another protrusion part (1111, 1112, 1121, 1122, 1131) of the plurality of protrusion parts (1111, 1112, 1121, 1122) is on opposite sides of the negative electrode substrate tab; or
at least one protrusion part (1111, 1112, 1121, 1122, 1131) of the plurality of protrusion parts (1111, 1112, 1121, 1122) is on opposite one side of the positive electrode substrate tab, and another protrusion part (1111, 1112, 1121, 1122, 1131) of the plurality of protrusion parts (1111, 1112, 1121, 1122) is on one side of the negative electrode substrate tab.

12. The secondary battery (100, 200) as claimed in claim 10 or 11, wherein the positive electrode substrate tab and the negative electrode substrate tab are each positioned at a center of a corresponding side of the electrode assembly side, the positive electrode substrate tab and the negative electrode substrate tab being aligned.

13. The secondary battery (100, 200) as claimed in any one of the claims 10 to 12, wherein the positive electrode substrate tab and the negative electrode substrate tab are positioned relative to each other so as not to overlap in a vertical line.

14. The secondary battery (100, 200) as claimed in any one of the preceding claims, wherein the positive electrode protrusion part and the negative electrode protrusion part have a side end corner of the electrode assembly (110) in a round shape.

15. The secondary battery (100, 200) as claimed in any one of the preceding claims, further comprising a positive electrode lead (132) and a negative electrode lead (131) that are electrically connected to the positive electrode substrate tab and the negative electrode substrate tab, respectively, the positive electrode lead (132) and the negative electrode lead (131) extending outward from the case, and the positive electrode substrate tab and the negative electrode substrate tab and the positive electrode lead (132) and the negative electrode lead (131) are not bent.
